# EUROPÄISCHE PATENTSCHRIFT

(11) **EP 3 769 445 B1**
(45) Veröffentlichungstag und Bekanntmachung des Hinweises auf die Patenterteilung: **30.07.2025**
(21) Anmeldenummer: 19709839.5
(22) Anmeldetag: 06.03.2019
(51) Int. Cl.: H04B 10/114, G05D 1/00, B66F 9/06, G05B 19/418

(54) **SYSTEM UND VERFAHREN ZUM BETREIBEN EINES SYSTEMS MIT ZUMINDEST EINEM ERSTEN UND EINEM ZWEITEN MOBILTEIL**
SYSTEM AND METHOD FOR OPERATING A SYSTEM HAVING AT LEAST ONE FIRST MOBILE PART AND ONE SECOND MOBILE PART
SYSTÈME ET PROCÉDÉ POUR FAIRE FONCTIONNER UN SYSTÈME COMPRENANT AU MOINS UNE PREMIÈRE ET UNE DEUXIÈME PARTIE MOBILE

(30) Priorität: 22.03.2018 DE 102018002379
(43) Veröffentlichungstag der Anmeldung: 27.01.2021
(73) Patentinhaber: SEW-EURODRIVE GmbH & Co. KG, 76646 Bruchsal (DE)
(72) Erfinder: SCHÄFER, Thomas, 76689 Karlsdorf-Neuthard (DE); WANJEK, Andreas, 68753 Waghäusel (DE); HUA, Zhidong, 76646 Bruchsal (DE)
(86) Internationale Anmeldenummer: PCT/EP2019/025060
(87) Internationale Veröffentlichungsnummer: WO 2019/179662

(56) Entgegenhaltungen:
- WO-A2-2008/124713
- DE-A1- 102011 108 579
- US-A1- 2015 316 924

## Beschreibung

Die Erfindung betrifft ein System und ein Verfahren zum Betreiben eines Systems mit zumindest einem ersten und einem zweiten Mobilteil.

Es ist allgemein bekannt, dass in der Intralogistik Mobilteile, wie fahrerlose Transportsysteme FTS, logistische Aufgaben ausführen.

**Aus der** WO 2018 / 124713 A2 **ist als nächstliegender Stand der Technik ein System und ein Verfahren zur Navigation bekannt.**

Der Erfindung liegt daher die Aufgabe zugrunde, ein System weiterzubilden, wobei eine einfache und kostengünstige Kommunikation herstellbar sein soll.

Erfindungsgemäß wird die Aufgabe bei dem System nach den in Anspruch 1 und bei dem Verfahren nach den in Anspruch 11 angegebenen Merkmalen gelöst.

Wichtige Merkmale der Erfindung bei dem System sind, dass das System mit zumindest einem ersten und einem zweiten Mobilteil, welches jeweils auf einer Verfahrebene einer Anlage verfahrbar ist, ausgeführt ist,
das erste Mobilteil an seinen Außeneckbereichen Eckmodule aufweist,
wobei das zweite Mobilteil ebenfalls an seinen Außeneckbereichen Eckmodule aufweist,
wobei jedes Eckmodul jeweils eine derartige elektronische Schaltung samt derartiger Sender und derartiger Empfänger aufweist,
dass mittels der Sender moduliertes Licht aussendbar ist und mittels der Empfänger moduliertes Licht detektierbar und demodulierbar ist,
wobei die Empfänger für Licht aus verschiedenen Raumrichtungen verschieden empfindlich sind,
insbesondere wobei die Empfänger des jeweiligen Eckmoduls in einer auf dieses jeweilige Eckmodul bezogenen Ebene angeordnet sind.

Von Vorteil ist dabei, dass eine einfache und kostengünstige Kommunikation ausführbar ist. Denn es sind nur Sender und Empfänger für Licht notwendig. Hierbei sind photosensitive Halbleiter als Empfänger und Licht emittierende Leuchtquellen, wie LED, verwendbar. Diese Bauelemente sind kostengünstig einsetzbar und für eine hohe Datenübertragungsrate verwendbar. Somit sind durch Übermittelung von Daten von einem Eckmodul eines ersten Mobilteils zu einem Eckmodul eines zweiten Mobilteils und darauffolgende Weiterleitung der Daten von dem Eckmodul des zweiten Mobilteil zu einem Eckmodul eines dritten Mobilteils Daten zwischen dem ersten und dritten Mobilteil übermittelbar, obwohl keine Sichtverbindung zwischen dem ersten und dritten Mobilteil vorliegt. Beispielsweise sind auch Mobilteile mit Daten versorgbar, welche in einer Gasse eines Regallagers sich befinden.

Bei einer vorteilhaften Ausgestaltung sind die Sender eines jeweiligen Eckmoduls auf einer Leiterplatte angeordnet und/oder bestückt, welche an einem Deckelteil des jeweiligen Eckmoduls befestigt ist,
wobei ein am Deckelteil des jeweiligen Eckmoduls befestigter Spiegel das von den Sendern abgestrahlte Licht umlenkt, insbesondere wobei die Leiterplatte parallel zur Verfahrebene ausgerichtet ist,
insbesondere wobei der Spiegel einen Teilbereich eines Rotationskörpers aufweist, dessen Rotationssymmetrieachse parallel zur Normalenrichtung der Leiterplattenebene ausgerichtet ist und/oder die Leiterplatte senkrecht schneidet. Von Vorteil ist dabei, dass eine leiterplatte platzsparend parallel zum Deckelteil und zur Grundplatte anordenbar ist und das Licht mittels eines Spiegels in einfacher Weise umlenkbar ist.

Bei einer vorteilhaften Ausgestaltung sind eine erste Menge der Eckmodule eines jeweiligen Mobilteils an den Ecken eines gedachten Rechtecks in einer ersten Ebene angeordnet, die einen ersten Bodenabstand aufweist. Von Vorteil ist dabei, dass eine erste Kommunikationsebene in der Anlage einrichtbar ist.

Bei einer vorteilhaften Ausgestaltung sind die Empfänger eines jeweiligen Eckmoduls in einem Begrenzungsteil, insbesondere in einer jeweiligen Vertiefung eines Begrenzungsteils des jeweiligen Eckmoduls, derart aufgenommen, dass der empfindliche Bereich des jeweiligen Empfängers eines jeweiligen Eckmoduls einen Winkelbereich von weniger als 60° in einer zur Verfahrebene parallelen Ebene überdeckt. Von Vorteil ist dabei, dass die Empfänger derart aufgenommen sind, dass sie unterschiedliche Raumrichtungen unterschiedlich stark detektieren. Somit ist beim Detektieren eines Senders einer der Empfänger mit der höchsten Signalstärke verwendbar, so dass ein entsprechender Datenübertragungskanal aufbaubar ist. Die anderen Empfänger sind dann für andere Datenübertragungskanäle verwendbar, also zur Datenübermittlung von anderen Sendern. Somit sind Gruppen bildbar, die unabhängig voneinander Daten gleichzeitig mit demselben Medium übermitteln können.

Bei einer vorteilhaften Ausgestaltung überdeckt der empfindliche Bereich des jeweiligen Sensors, also der empfindliche Gesamtbereich aller Empfänger eines jeweiligen Eckmoduls gemeinsam, einen Winkelbereich von mehr als 180° in einer zur Verfahrebene parallelen Ebene. Von Vorteil ist dabei, dass ein möglichst großer Winkelbereich abdeckbar ist, insbesondere ist durch Überlappung mit dem empfindlichen Bereich anderer Eckmodule eine Rundumüberwachung realisierbar.

Bei einer vorteilhaften Ausgestaltung überdeckt der von den Sendern des jeweiligen Eckmoduls mit Licht bestrahlbare Bereich einen Winkelbereich von mehr als 180° in einer zur Verfahrebene parallelen Ebene überdeckt. Von Vorteil ist dabei, dass ein möglichst großer Winkelbereich abdeckbar ist.

Bei einer vorteilhaften Ausgestaltung sind zweite Eckmodule des jeweiligen Mobilteils an den Ecken eines gedachten Rechtecks in einer zweiten Ebene angeordnet, die einen zweiten, vom ersten unterschiedlichen Bodenabstand aufweist. Von Vorteil ist dabei, dass eine weitere Kommunikationsebene in der Anlage einrichtbar ist.

Bei einer vorteilhaften Ausgestaltung weist das jeweilige Eckmodul ein für Licht transparentes Gehäuseteil, insbesondere Plexiglasteil, auf,
wobei das Gehäuseteil einen ersten ebenen Bereich aufweist, an den ein gebogener Bereich anschließt, der an einen zweiten ebenen Bereich anschließt,
wobei das Gehäuseteil einstückig ausgeführt ist,
wobei auf einer Grundplatte des jeweiligen Eckmoduls ein Haltemittel derart angeordnet ist, dass an dem Haltemittel eine Kamera befestigbar ist oder befestigt ist,
insbesondere wobei die Kamera Bilder aufnimmt durch den ersten oder durch den zweiten Bereich hindurch. Von Vorteil ist dabei, dass keine Verzerrung der Bilder durch die Plexiglasscheibe bewirkt wird. Außerdem ist das Einbauen der Kamera optional. Das heißt, die Eckmodule sind auch ohne Kamera betreibbar. In jedem Fall sind jedoch die Haltemittel vorhanden. Bevorzugt wird als Haltemittel ein auf der Grundplatte angeschweißtes Gewindebuchsenteil oder Schraubmutterteil verwendet, in welches ein Halteblech mit einer Schraube anbringbar ist, an welchem die Kamera befestigbar ist.

Bei einer vorteilhaften Ausgestaltung weist die mechanische Schnittstelle ein Bohrbild auf und einen Zentrierbund
und/oder die mechanische Schnittstelle ist mittels eines Bohrbildes, einer elektrischen Steckverbindung und eines Zentrierbundes definiert. Von Vorteil ist dabei, dass die Eckmodule austauschbar sind. Somit ist bei Wartung ein jeweiliges Eckmodul austauschbar gegen ein anderes. Alle Eckmodule sind dabei baugleich ausgeführt. Somit muss für den Austausch nur eine einzige Sorte von Eckmodulen vorrätig gehalten werden.

Bei einer vorteilhaften Ausgestaltung überdeckt der empfindliche Bereich des jeweiligen Sensors einen Winkelbereich von mehr als 180° in einer zur Verfahrebene parallelen Ebene.

Von Vorteil ist dabei, dass ein Eckmodul eines ersten Mobilteils mit mehreren Eckmodulen eines anderen Mobilteils eine Kommunikationsverbindung aufbauen kann

Bei einer vorteilhaften Ausgestaltung überdeckt der vom Sender mit Licht bestrahlbare Bereich einen Winkelbereich von mehr als 180° in einer zur Verfahrebene parallelen Ebene. Von Vorteil ist dabei, dass mehrere Eckmodule anderer Mobilteile mit Licht von einem Eckmodul eines Mobilteils aus bestrahlbar sind. Somit ist eine MP2MP Kommunikation aufbaubar.

Bei einer vorteilhaften Ausgestaltung sind die Eckmodule eines jeweiligen Mobilteils an den Ecken eines gedachten Rechtecks angeordnet. Von Vorteil ist dabei, dass der das Mobilteil umgebende Bereich der Verfahrebene jeweils von zumindest zwei Eckmodulen, insbesondere von den Sendern zumindest zweier Eckmodule bestrahlbar ist. Ebenso ist Licht eines der Eckmodule der weiteren Mobilteile von den Empfängern zumindest zweier Eckmodule des Mobilteils empfangbar.

Wichtige Merkmale bei dem Verfahren zum Betreiben eines Systems sind, dass das System mehrere, auf einer Verfahrfläche, insbesondere Verfahrebene, einer Anlage verfahrbare Mobilteile aufweist,
welche an Außeneckbereichen Eckmodule aufweisen, wobei jedes der Eckmodule zumindest einen Sender für Licht und einen Empfänger für Licht aufweist,
wobei eine Mehrpunkt-zu-Mehrpunktkommunikation, insbesondere also MP2MP, insbesondere also eine Multipoint-to Multipoint-Verbindung, zwischen den Eckmodulen der Mobilteile aufgebaut wird,
insbesondere wobei die Mobilteile, insbesondere die Eckmodule der Mobilteil, Teilnehmer eines Mesh-Netzwerks sind.

Von Vorteil ist dabei, dass eine einfache und kostengünstige Kommunikation ausführbar ist. Insbesondere ist auch eine Kommunikation zwischen zwei, nicht miteinander in Sichtverbindung angeordneten Mobilteilen ausführbar, wobei zwischengeordnete Mobilteile als Datenweiterleitung fungieren.

Bei einer vorteilhaften Ausgestaltung ist die Datenübertragung innerhalb einer ersten Gruppe von Eckmodulen gleichzeitig, insbesondere parallel, und unabhängig von der der Datenübertragung innerhalb einer zweiten Gruppe von Eckmodulen,
insbesondere in beiden Gruppen mit demselben Licht und mit derselben Modulationsfrequenz. Von Vorteil ist dabei, dass eine höhere Datenübertragungsrate im selben Kanal mit demselben Medium erreichbar ist.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine erfindungsgemäße Anlage mit Eckmodulen umfassenden Mobilteilen (1, 2) schematisch skizziert.
In der Figur 2 ist ein Eckmodul mit transparentem Gehäuseteil 20, insbesondere Plexiglasteil, und mit Deckelteil 21 in Schrägansicht dargestellt.
In der Figur 3 ist im Unterschied zur Figur 2 das transparente Gehäuseteil 20 und das Deckelteil 21 ausgeblendet

Die Mobilteile 1 und 2 sind auf einer Verfahrfläche der Anlage bewegbar. Jedes der Mobilteile (1, 2) weist eine jeweilige Lenkeinheit und einen jeweiligen elektromotorischen Antrieb auf, so dass die Steuerung den Antrieb entsprechend einem für das Mobilteil (1, 2) vorgesehenen Fahrauftrag steuert.

Die Mobilteile 1 und 2 sind vorzugsweise gleichartig ausgeführt.

Jedes der Mobilteile 1 und 2 weist an seinen vier Außenecken jeweils ein Eckmodul (3) auf, welches jeweils zumindest einen Sender, von welchem Licht aussendbar ist, und zumindest einen Empfänger, von welchem Licht detektierbar ist, aufweist.

Der vom Sender bestrahlbare Winkelbereich umfasst einen Winkelbereich von mehr als 180° in einer zur Verfahrfläche parallelen Ebene.

Da die Eckmodule an den vier Außenecken angeordnet sind und somit jeweils um 90° beziehungsweise ein ganzzahliges Vielfaches von 90° verdreht angeordnet sind, ist der gesamte Winkelbereich um das jeweilige Mobilteil (1, 2) herum sogar überlappend abgedeckt.

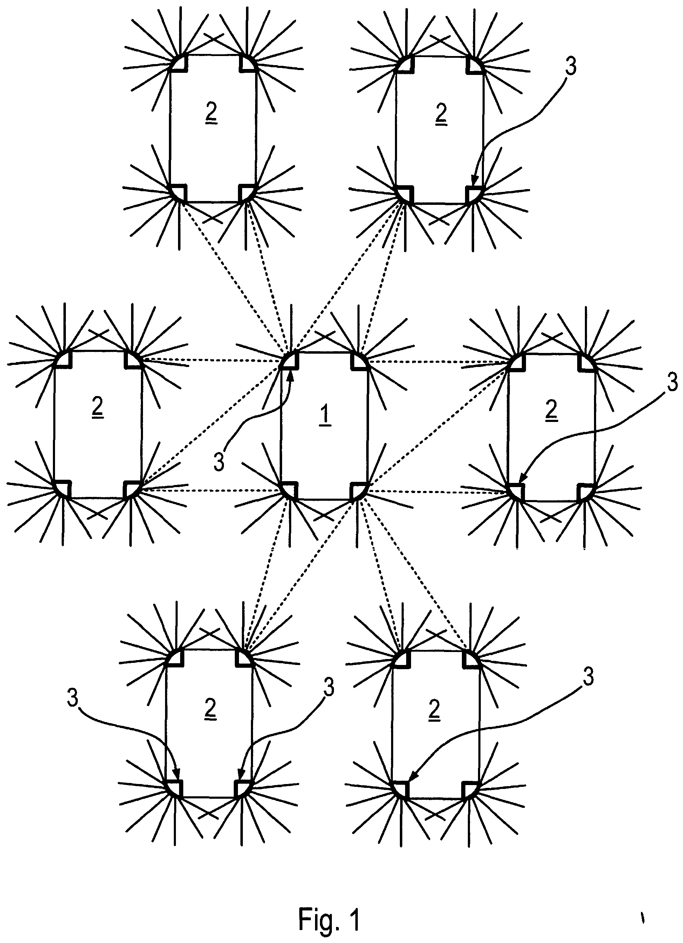

Auf diese Weise ist also eine MP2MP Kommunikation ermöglicht, also eine Mehrpunkt-zu-Mehrpunkt-Kommunikation. Denn von einem ersten Eckmodul 3 eines ersten Mobilteils 1 ist - wie in Figur 1 dargestellt - eine Kommunikationsverbindung zu mehreren Eckmodulen 3 eines oder mehrerer zweiten Mobilteile 2. Ebenso ist von einem Eckmodul eines zweiten Mobilteils 2 eine Kommunikationsverbindung zu einem oder mehreren Eckmodulen 3 des ersten Mobilteils 1 aufbaubar.

Ein Datentelegramm ist also von einem ersten Mobilteil 1 zu einem zweiten Mobilteil 2 übermittelbar, welches dann dieses Datentelegramm zu einem weiteren zweiten Mobilteil 2 übermittelt. Ein jeweiliges Mobilteil (1, 2) ist also als Übermittler verwendbar.

Somit sind Datentelegramme über mehrere Mobilteile 1, 2 hinweg übermittelbar.

Auf diese Weise sind sogar Daten um ein Hindernis herum übermittelbar, wenn dieses Hindernis einen direkten Lichtstrahl verhindert. Dies ist besonders vorteilhaft, wenn ein erstes Mobilteil 1 in einer Gasse eines Regallagers sich befindet und das weitere zweite Mobilteil 2 in einer anderen Gasse des Regallagers. Somit ist ein zweites oder mehrere zweite Mobilteile 2 als Übermittler einsetzbar, so dass die Datentelegramme um eine oder mehrere Ecken herumleitbar sind.

Als Medium für die erfindungsgemäße Datenübertragung wird Licht verwendet. Im Unterschied zu Funkwellen, wie beispielsweise bei der WLAN-Kommunikation, werden von einem Sender eines Eckmoduls nicht alle Empfänger aller Eckmodule erreicht, obwohl Entfernung der Mobilteile oder Eckmodule zueinander genügend klein ist.

Erfindungsgemäß werden also Gruppen von Eckmodulen gebildet, die im selben Medium unabhängig voneinander gleichzeitig Daten innerhalb der jeweiligen Gruppe übertragen. Eine Gruppe besteht beispielsweise aus zwei Eckmodulen.

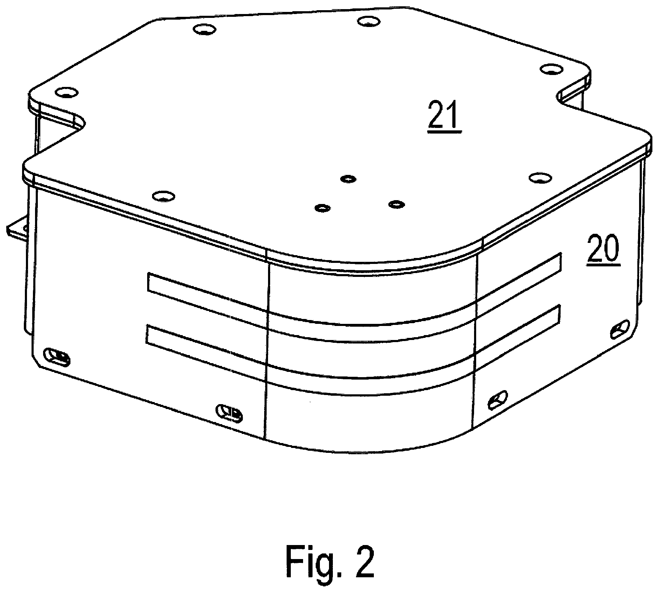

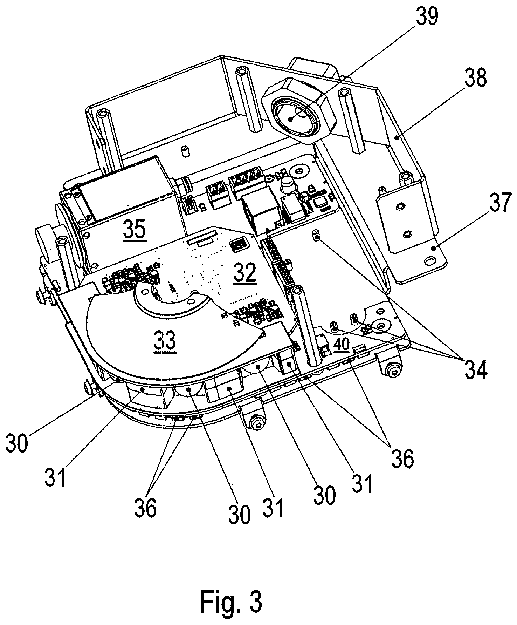

Wie in Figur 2 und 3 dargestellt, weist ein jeweiliges Eckmodul mehrere, insbesondere vier, Empfänger auf, deren Empfindlichkeit für unterschiedliche Raumrichtungen unterschiedlich ist.

Beim Aufbau der Datenverbindung wird daher von einem Sender zunächst ein Signal gesendet und dann von einem Eckmodul derjenige Empfänger bestimmt, welcher das stärkste Signal empfängt. Mit diesem Empfänger wird ein Datenübertragungskanal zum Sender ausgebaut. Somit sind dann im gleichen Medium bei gleicher Frequenz gleichzeitig innerhalb jeder der Gruppen, also derart aufgebauten Datenübertragungskanäle, Daten gleichzeitig unabhängig voneinander übermittelbar. Jede dieser Gruppen wäre auch als Netzwerk bezeichenbar.

Insbesondere sind die Eckmodule der Gruppen dabei stets weniger voneinander entfernt als die maximale, in einer einzigen Richtung bestimmte Reichweite eines der Sender beträgt. Wenn also Sichtkontakt bestehen würde, wäre eine Datenübertragung zwischen allen Eckmodulen möglich.

Die Eckmodule sind am Mobilteil (1, 2) in stets gleichartiger Weise angebracht, also mit einer definierten mechanischen Schnittstelle. Vorzugsweise ist hierzu ein Bohrbild in einer Ebene angebracht, welche eine jeweilige Eckfläche des Mobilteils (1, 2) umfasst. Vorzugsweise weist die mechanische Schnittstelle auch ein Zentriermittel, wie einen Zentrierbund oder dergleichen, auf, welches an der jeweiligen Eckfläche des Mobilteils (1, 2) ausgeformt ist.

Mittels der an allen Eckbereichen aller Module (1, 2) stets gleichartigen Ausführung der mechanischen Schnittstelle ist es ermöglicht, alle Eckmodule jeweils (1, 2) gegeneinander auszutauschen.

Jedes der Eckmodule (1, 2) weist nicht nur den genannten jeweiligen Sender und Empfänger auf, sondern auch eine mit dieser verbundenen elektronischen Schaltung, welche insbesondere auch zusammen mit dem Sender und Empfänger auf einer Leiterplatte bestückt ist.

Jedes der Eckmodule (1, 2) ist mittels elektrischer Steckverbindung mit dem Mobilteil verbunden, sodass die elektronische Schaltung samt Sender und Empfänger elektrisch versorgt sind sowie ein Datenbus zum Datenaustausch zwischen der Steuerung des Mobilteils und der elektronischen Schaltung samt Sender und Empfänger durch die mechanischen Schnittstellen durchleitbar ist.

Bei weiteren erfindungsgemäßen Ausführungsbeispielen sind erste Eckmodule in einer zur Verfahrebene parallelen ersten Ebene angeordnet. Somit ist der Bodenabstand dieser

Eckmodule konstant und weist einen ersten Wert auf. Ebenso sind zweite Eckmodule in einer zur Verfahrebene parallelen zweiten Ebene angeordnet. Somit ist der Bodenabstand dieser zweiten Eckmodule konstant und weist einen zweiten Wert auf. Auf diese Weise ist nicht nur innerhalb der ersten Ebene, sondern auch innerhalb der davon beabstandeten zweiten Ebene Datenübertragung in jeweils voneinander unabhängigen Gruppen ausführbar.

Vorzugsweise weist dabei ein Mobilteil jeweils 8 Eckmodule auf, da es im Wesentlichen quaderförmig ausgeformt ist.

Wie in Figur 2 dargestellt, weist das Eckmodul jeweils eine Grundplatte auf, an deren Laschenbereich 37 ein Seitenbereich 38 ausgeformt ist. Im Seitenbereich ist auch eine Versorgungsleitung und eine Datenleitung herführbar.

Auf der Grundplatte ist eine Leiterplatte 40 befestigt, welche an ihrer der Grundplatte zugewandten Unterseite, also zwischen Leiterplatte 40 und Grundplatte, Leuchtmittel 36, insbesondere LED zur Statusanzeige, aufweist.

Auf einer mit der Leiterplatte 40 elektrisch verbundenen weiteren Leiterplatte 32 sind vier Empfänger 30, insbesondere Fototransistoren, angeordnet, welche durch ein Begrenzungsteil 31 zur Aufnahme der Empfänger 30 voneinander getrennt sind und nur einen durch das Begrenzerteil 31 vorgegebenen Raumwinkel detektieren können. Somit sind die Empfänger 30 für verschiedene Raumrichtungen verschieden empfindlich.

Das für Licht transparente Gehäuseteil 20, insbesondere Plexiglasteil, ist einstückig ausgeführt und weist einen ersten ebenen Bereich auf, an den ein gebogener Bereich anschließt, der an einen weiteren ebenen Bereich anschließt.

Im Innenraumbereich sind jeweils eine Kamera 35 hinter einem jeweiligen ebenen Bereich anordenbar, so dass die Position des Mobilteils mittels Bildauswertung der von den Kameras 35 aufgenommenen Bildern ermittelbar ist.

Zur Befestigung der jeweiligen Kamera 35 sind an der Grundplatte Haltemittel 34 angebracht, auch wenn keine Kamera 35 befestigt ist, ist jedoch die Möglichkeit der Befestigung der Kamera durch die Haltemittel 34 vorhanden.

An der Innenseite des Deckelteils 21 ist eine dritte Leiterplatte befestig, auf welcher Leuchtmittel, wie LED, angeordnet sind, welche als die Sender für Licht zur Datenübertragung fungieren, also die MP2MP Kommunikation ermöglichen. Mittels eines an dem Deckelteil 21 befestigten Spiegels 33 wird das Licht der Sender umgelenkt in die erste Ebene, also in einen im Wesentlichen ungefähr parallel zur Verfahrebene ausgerichtete Lichtstrahl oder Lichtkegel.

Dabei ist der Spiegel 33 als Teilbereich eines konkaven Rotationskörpers ausgeführt.

Bei weiteren erfindungsgemäßen Ausführungsbeispielen sind ein oder mehrere Eckmodule (1, 2) auch an einer oder mehreren Positionen in der Anlage stationär angeordnet. Somit ist auch ein Datenaustausch mit einer zentralen Steuerung ermöglicht, wobei diese zentrale Steuerung der Anlage mit dem oder den stationär angeordneten Eckmodulen zum Datenaustausche verbunden ist.

### Bezugszeichenliste

1 Mobilteil
2 Mobilteil
3 Eckmodul
20 transparentes Gehäuseteil, insbesondere Plexiglasteil
21 Deckelteil
30 Empfänger, insbesondere Fototransistor
31 Begrenzungsteil zur Aufnahme der Empfänger
32 leiterplatte
33 Spiegel
34 Haltemittel
35 Kamera
36 Leuchtmittel, insbesondere LED zur Statusanzeige
37 Laschenbereich der Grundplatte des Gehäuseteils 38 Seitenwand
39 Kabelverschraubung

## Patentansprüche

1. System mit zumindest einem ersten und einem zweiten Mobilteil, welches jeweils auf einer Verfahrebene einer Anlage verfahrbar ist,
**wobei** das erste Mobilteil an seinen Außeneckbereichen Eckmodule aufweist,
wobei das zweite Mobilteil ebenfalls an seinen Außeneckbereichen Eckmodule aufweist,
**dadurch gekennzeichnet, dass**
jedes Eckmodul jeweils eine derartige elektronische Schaltung samt derartiger Sender und derartiger Empfänger aufweist,
dass mittels der Sender moduliertes Licht aussendbar ist und mittels der Empfänger moduliertes Licht detektierbar und demodulierbar ist,
**wobei die Empfänger für Licht aus verschiedenen Raumrichtungen verschieden empfindlich sind.**

2. System nach Anspruch 1,
**dadurch gekennzeichnet, dass**
die Sender eines jeweiligen Eckmoduls auf einer Leiterplatte angeordnet und/oder bestückt sind, welche an einem Deckelteil des jeweiligen Eckmoduls befestigt ist,
wobei ein am Deckelteil des jeweiligen Eckmoduls befestigter Spiegel das von den Sendern abgestrahlte Licht umlenkt, insbesondere wobei die Leiterplatte parallel zur Verfahrebene ausgerichtet ist,
insbesondere wobei der Spiegel einen Teilbereich eines Rotationskörpers aufweist, dessen Rotationssymmetrieachse parallel zur Normalenrichtung der Leiterplattenebene ausgerichtet ist und/oder die Leiterplatte senkrecht schneidet.

3. System nach mindestens einem der vorangegangenen Ansprüche,
**dadurch gekennzeichnet, dass**
eine erste Menge der Eckmodule eines jeweiligen Mobilteils an den Ecken eines gedachten Rechtecks in einer ersten Ebene angeordnet sind, die einen ersten Bodenabstand aufweist.

4. System nach mindestens einem der vorangegangenen Ansprüche,
**dadurch gekennzeichnet, dass**
in jedem der Außeneckbereiche des jeweiligen Mobilteils eine elektromechanische Schnittstelle vorgesehen ist, so dass jedes Eckmodul austauschbar mit einem anderen der Eckmodule ist,
wobei die Schnittstelle eine mechanische Schnittstelle und eine elektrische Steckverbindung umfasst.

5. System nach mindestens einem der vorangegangenen Ansprüche,
**dadurch gekennzeichnet, dass**
die mechanische Schnittstelle ein Bohrbild aufweist und einen Zentrierbund
und/oder dass die mechanische Schnittstelle mittels eines Bohrbildes, einer elektrischen Steckverbindung und eines Zentrierbundes definiert ist.

6. System nach mindestens einem der vorangegangenen Ansprüche,
**dadurch gekennzeichnet, dass**
die Empfänger eines jeweiligen Eckmoduls in einem Begrenzungsteil, insbesondere in einer jeweiligen Vertiefung eines Begrenzungsteils des jeweiligen Eckmoduls, derart aufgenommen sind, dass der empfindliche Bereich des jeweiligen Empfängers eines jeweiligen Eckmoduls einen Winkelbereich von weniger als 60° in einer zur Verfahrebene parallelen Ebene überdeckt.

7. System nach mindestens einem der vorangegangenen Ansprüche,
**dadurch gekennzeichnet, dass**
der empfindliche Bereich des jeweiligen Sensors, also der empfindliche Gesamtbereich aller Empfänger eines jeweiligen Eckmoduls gemeinsam, einen Winkelbereich von mehr als 180° in einer zur Verfahrebene parallelen Ebene überdeckt.

8. System nach mindestens einem der vorangegangenen Ansprüche,
**dadurch gekennzeichnet, dass**
der von den Sendern des jeweiligen Eckmoduls mit Licht bestrahlbare Bereich einen Winkelbereich von mehr als 180° in einer zur Verfahrebene parallelen Ebene überdeckt.

9. System nach mindestens einem der vorangegangenen Ansprüche,
**dadurch gekennzeichnet, dass**
zweite Eckmodule des jeweiligen Mobilteils an den Ecken eines gedachten Rechtecks in einer zweiten Ebene angeordnet sind, die einen zweiten, vom ersten unterschiedlichen Bodenabstand aufweist.

10. System nach mindestens einem der vorangegangenen Ansprüche,
**dadurch gekennzeichnet, dass**
das jeweilige Eckmodul ein für Licht transparentes Gehäuseteil, insbesondere Plexiglasteil, aufweist,
wobei das Gehäuseteil einen ersten ebenen Bereich aufweist, an den ein gebogener Bereich anschließt, der an einen zweiten ebenen Bereich anschließt,
wobei das Gehäuseteil einstückig ausgeführt ist,
wobei auf einer Grundplatte des jeweiligen Eckmoduls ein Haltemittel derart angeordnet ist, dass an dem Haltemittel eine Kamera befestigbar ist oder befestigt ist,
insbesondere wobei die Kamera Bilder aufnimmt durch den ersten oder durch den zweiten Bereich hindurch.

11. Verfahren zum Betreiben eines Systems
wobei das System mehrere, auf einer Verfahrfläche, insbesondere Verfahrebene, einer Anlage verfahrbare Mobilteile aufweist,
welche an Außeneckbereichen Eckmodule aufweisen, wobei jedes der Eckmodule zumindest einen Sender für Licht und einen Empfänger für Licht aufweist,
**dadurch gekennzeichnet, dass**
**die Empfänger für Licht aus verschiedenen Raumrichtungen verschieden empfindlich sind,**
**wobei** eine Mehrpunkt-zu_Mehrpunktkommunikation zwischen den Eckmodulen der Mobilteile durch optische Kommunikation mittels der Sender und Empfänger der Eckmodule aufgebaut wird,
insbesondere wobei die Mobilteile Teilnehmer eines Mesh-Netzwerks sind.

12. **Verfahren nach Anspruch 11,**
**dadurch gekennzeichnet, dass**
die Datenübertragung innerhalb einer ersten Gruppe von Eckmodulen gleichzeitig, insbesondere parallel, und unabhängig von der der Datenübertragung innerhalb einer zweiten Gruppe von Eckmodulen,
insbesondere in beiden Gruppen mit demselben Licht und mit derselben Modulationsfrequenz.

## Claims

1. System comprising at least a first and a second mobile component, each of which can travel on a travel plane of a facility,
the first mobile component having corner modules on its outer corner regions,
the second mobile component likewise having corner modules on its outer corner regions, **characterised in that**
each corner module each has such an electronic circuit, together with such transmitters and such receivers, that
modulated light can be emitted by means of the transmitters, and modulated light can be detected and demodulated by means of the receivers,
the receivers having different degrees of sensitivity to light from different spatial directions.

2. System according to claim 1,
**characterised in that**
the transmitters of each corner module are arranged and/or fitted on a circuit board that is fastened to a cover part of each corner module,
a mirror fastened to the cover part of each corner module deflecting the light radiated by the transmitters, the circuit board in particular being oriented in parallel with the travel plane,
the mirror in particular having a portion of a solid of revolution, the axis of rotational symmetry of which is oriented in parallel with the normal direction of the circuit board plane and/or intersects the circuit board perpendicularly.

3. System according to at least one of the preceding claims,
**characterised in that**
a first set of the corner modules of each mobile component is arranged at the corners of an imaginary rectangle in a first plane that has a first ground clearance.

4. System according to at least one of the preceding claims,
**characterised in that**
an electromechanical interface is provided in each of the outer corner regions of each mobile component such that each corner module can be replaced by another of the corner modules, the interface comprising a mechanical interface and an electrical plug connection.

5. System according to at least one of the preceding claims,
**characterised in that**
the mechanical interface has a drilling pattern and a centring collar
and/or **in that** the mechanical interface is defined by means of a drilling pattern, an electrical plug connection and a centring collar.

6. System according to at least one of the preceding claims,
**characterised in that**
the receivers of each corner module are received in a restricting part, in particular each in a respective recess in a restricting part of each corner module, in such a way that the sensitive region of each receiver of each corner module covers an angular range of less than 60° in a plane that is parallel to the travel plane.

7. System according to at least one of the preceding claims,
**characterised in that**
the sensitive region of each sensor, i.e. the entire sensitive region of all the receivers of each corner module together, covers an angular range of more than 180° in a plane that is parallel to the travel plane.

8. System according to at least one of the preceding claims,
**characterised in that**
the region that can be irradiated with light by the transmitters of each corner module covers an angular range of more than 180° in a plane that is parallel to the travel plane.

9. System according to at least one of the preceding claims,
**characterised in that**
second corner modules of each mobile component are arranged at the corners of an imaginary rectangle in a second plane that has a second ground clearance different from the first ground clearance.

10. System according to at least one of the preceding claims,
**characterised in that**
each corner module has a housing part that is transparent to light, in particular a Plexiglass part,
the housing part having a first planar region which is adjoined by a curved region which adjoins a second planar region,
the housing part being configured in one piece,
a retaining means being arranged on a base plate of each corner module in such a way that a camera can be fastened or is fastened to the retaining means,
the camera in particular taking images through the first region or through the second region.

11. Method for operating a system,
the system having a plurality of mobile components which can travel on a travel surface, in particular a travel plane, of a facility
and which have corner modules on outer corner regions, each of the corner modules having at least one transmitter for light and one receiver for light,
**characterised in that**
the receivers have different degrees of sensitivity to light from different spatial directions, multipoint-to-multipoint communication being established between the corner modules of the mobile components through optical communication by means of the transmitters and receivers of the corner modules,
the mobile components in particular being subscribers of a mesh network.

12. Method according to claim 11,
**characterised in that**
the data transmission within a first group of corner modules takes place simultaneously with, in particular concurrently with, and independently of the data transmission within a second group of corner modules,
in particular using the same light and the same modulation frequency in both groups.

## Revendications

1. Système comprenant au moins des première et deuxième parties mobiles, qui peuvent être respectivement déplacées sur un plan de déplacement d'une installation, la première partie mobile présentant des modules d'angle au niveau de ses régions d'angle extérieures,
la deuxième partie mobile présentant également des modules d'angle au niveau de ses régions d'angle extérieures,
**caractérisé en ce que**
chaque module d'angle présente respectivement un circuit électronique d'un type tel, ce qui inclut des émetteurs d'un type tel et des récepteurs d'un type tel,
que de la lumière modulée peut être émise au moyen des émetteurs et que de la lumière modulée peut être détectée et démodulée au moyen des récepteurs,
les récepteurs étant différemment sensibles à de la lumière provenant de différentes directions spatiales.

2. Système selon la revendication 1,
**caractérisé en ce que**
les émetteurs d'un module d'angle respectif sont agencés et/ou montés sur une carte de circuit imprimé qui est fixée à une partie couvercle du module d'angle respectif,
un miroir fixé à la partie couvercle du module d'angle respectif déviant la lumière émise par les émetteurs, la carte de circuit imprimé étant en particulier orientée parallèlement au plan de déplacement,
le miroir présentant en particulier une sous-région d'un corps de rotation dont l'axe de symétrie de rotation est orienté parallèlement à la direction de normale du plan de carte de circuit imprimé et/ou croise de manière perpendiculaire la carte de circuit imprimé.

3. Système selon au moins une quelconque des revendications précédentes, **caractérisé en ce que**
une première quantité des modules d'angle d'une partie mobile respective sont agencés au niveau des coins d'un rectangle imaginaire dans un premier plan présentant une première distance au sol.

4. Système selon au moins une quelconque des revendications précédentes, **caractérisé en ce que**
une interface électromécanique est prévue dans chacune des régions d'angle extérieures de la partie mobile respective, de sorte que chaque module d'angle est interchangeable avec un autre des modules d'angle,
l'interface comprenant une interface mécanique et un connecteur électrique.

5. Système selon au moins une quelconque des revendications précédentes, **caractérisé en ce que**
l'interface mécanique présente un schéma de perçage et un collet de centrage et/ou **en ce que** l'interface mécanique est définie au moyen d'un schéma de perçage, d'un connecteur électrique et d'un collet de centrage.

6. Système selon au moins une quelconque des revendications précédentes, **caractérisé en ce que**
les récepteurs d'un module d'angle respectif sont logés dans une partie de délimitation, en particulier dans une cavité respective d'une partie de délimitation du module d'angle respectif, de telle manière que la région sensible du récepteur respectif d'un module d'angle respectif couvre une plage angulaire inférieure à 60° dans un plan parallèle au plan de déplacement.

7. Système selon au moins une quelconque des revendications précédentes, **caractérisé en ce que**
la région sensible du capteur respectif, c'est-à-dire la région sensible totale de tous les récepteurs d'un module d'angle respectif couvre en commun une plage angulaire supérieure à 180° dans un plan parallèle au plan de déplacement.

8. Système selon au moins une quelconque des revendications précédentes, **caractérisé en ce que**
la région pouvant être éclairée par les émetteurs du module d'angle respectif couvre une plage angulaire supérieure à 180° dans un plan parallèle au plan de déplacement.

9. Système selon au moins une quelconque des revendications précédentes, **caractérisé en ce que**
des deuxièmes modules d'angle de la partie mobile respective sont agencés au niveau des coins d'un rectangle imaginaire dans un deuxième plan présentant une deuxième distance au sol différente de la première.

10. Système selon au moins une quelconque des revendications précédentes, **caractérisé en ce que**
le module d'angle respectif présente une partie boîtier transparente à la lumière, en particulier une partie en plexiglas,
la partie boîtier présentant une première région plane à laquelle se raccorde une région incurvée se raccordant à une deuxième région plane,
la partie boîtier étant conçue d'un seul tenant,
un moyen de retenue étant agencé sur une plaque de base du module d'angle respectif de telle manière qu'une caméra peut être fixée ou est fixée au moyen de retenue,
la caméra prenant en particulier des vues à travers la première ou à travers la deuxième région.

11. Procédé de fonctionnement d'un système,
le système comprenant plusieurs parties mobiles qui peuvent être déplacées sur une surface de déplacement, en particulier sur le plan de déplacement, d'une installation, et qui présentent des modules d'angle au niveau des régions d'angle extérieures, chacun des modules d'angle présentant au moins un émetteur de lumière et un récepteur de lumière,
**caractérisé en ce que**
les récepteurs sont différemment sensibles à de la lumière provenant de différentes directions spatiales.
une communication multipoint à multipoint étant établie entre les modules d'angle des parties mobiles par communication optique au moyen des émetteurs et des récepteurs des modules d'angle,
les parties mobiles étant en particulier des abonnés d'un réseau maillé.

12. Procédé selon la revendication 11,
**caractérisé en ce que**
la transmission de données au sein d'un premier groupe de modules d'angle est simultanée, en particulier parallèle, et indépendante par rapport à la transmission de données au sein d'un deuxième groupe de modules d'angle,
en particulier dans deux groupes avec la même lumière et la même fréquence de modulation.
